(19) **Europäisches Patentamt · European Patent Office · Office européen des brevets**

(11) **EP 2 999 163 B1**

(12) **FASCICULE DE BREVET EUROPEEN**

(45) Date de publication et mention de la délivrance du brevet:
**31.10.2018 Bulletin 2018/44**

(51) Int Cl.:
**H04L 12/721** *(2013.01)* **H04L 12/24** *(2006.01)*
**H04B 3/54** *(2006.01)* **H04L 12/701** *(2013.01)*

(21) Numéro de dépôt: **15185330.6**

(22) Date de dépôt: **15.09.2015**

(54) **PROCÉDÉ DE DÉTERMINATION D'UN COÛT D'UN LIEN DE COMMUNICATION, AINSI QUE DISPOSITIF, PRODUIT PROGRAMME D'ORDINATEUR ET MOYENS DE STOCKAGE CORRESPONDANTS**

VERFAHREN ZUR BESTIMMUNG DER KOSTEN EINER KOMMUNIKATIONSVERBINDUNG UND ENTSPRECHENDE VORRICHTUNG, COMPUTERPROGRAMMPRODUKT UND SPEICHERMITTEL

METHOD FOR DETERMINING A COST OF A COMMUNICATION LINK, AS WELL AS CORRESPONDING EQUIPMENT, COMPUTER PROGRAM PRODUCT AND STORAGE MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.09.2014 FR 1458782**

(43) Date de publication de la demande:
**23.03.2016 Bulletin 2016/12**

(73) Titulaire: **SAGEMCOM ENERGY & TELECOM SAS**
**92500 Rueil-Malmaison (FR)**

(72) Inventeurs:
• **ROTER, Ziv**
**92500 Rueil Malmaison (FR)**
• **SERGI, Jérémie**
**92500 Rueil Malmaison (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2012 008 503 US-A1- 2012 182 881**

• **"G.9903 Amd1 AR text - draft v3", ITU-T DRAFT ; STUDY PERIOD 2013-2016, INTERNATIONAL TELECOMMUNICATION UNION, GENEVA ; CH, 12 juillet 2013 (2013-07-12), pages 1-240, XP044003744,**

• **STEFANO GALLI Q15/15 RAPPORTEUR ASSIA ET AL: "Draft revised Recommendation ITU-T G.9903 (for Consent, 6 December 2013);TD 145 Rev. 1 (PLEN/15)", ITU-T DRAFT ; STUDY PERIOD 2013-2016, INTERNATIONAL TELECOMMUNICATION UNION, GENEVA ; CH, vol. 15/15, 27 novembre 2013 (2013-11-27), pages 1-214, XP044034810,**

• **ERDF: "G.g3-plc: LQI and Metric Improvements (CCTT103 + CCTT104 + CCTT110 + CCTT111 + CCTT132);TD2013- 10-Q15-027", ITU-T DRAFT ; STUDY PERIOD 2013-2016, INTERNATIONAL TELECOMMUNICATION UNION, GENEVA ; CH, vol. 15/15, 19 octobre 2013 (2013-10-19), pages 1-7, XP044003796,**

• **ERDF: "G.g3-plc: Routing Messages Clarifications (CCTT50+CCTT113+CCTT116+ CCTT60/79/106+CCTT119);TD2013-10-Q15-029", ITU-T DRAFT ; STUDY PERIOD 2013-2016, INTERNATIONAL TELECOMMUNICATION UNION, GENEVA ; CH, vol. 15/15, 19 octobre 2013 (2013-10-19), pages 1-13, XP044003794,**

• **ERDF: "G.g3-plc: LQI and Metric Improvements (CCTT103 + CCTT104 + CCTT110 + CCTT111 + CCTT132);TD2013- 10-Q15-031R1", ITU-T DRAFT ; STUDY PERIOD 2013-2016, INTERNATIONAL TELECOMMUNICATION UNION, GENEVA ; CH, vol. 15/15, 29 octobre 2013 (2013-10-29), pages 1-7, XP044004029,**

- ERDF: "G.g3-plc: Routing Messages Clarifications (CCTT50+CCTT113+CCTT116+ CCTT60/79/106+CCTT119);TD2013-10-Q15-029R1", ITU-T DRAFT ; STUDY PERIOD 2013-2016, INTERNATIONAL TELECOMMUNICATION UNION, GENEVA ; CH, vol. 15/15, 31 octobre 2013 (2013-10-31), pages 1-14, XP044004053,

- STEFANO GALLI Q15/15 RAPPORTEUR ASSIA ET AL: "Draft revised Recommendation ITU-T G.9903 (for Consent, 6 December 2013);TD 145 Rev. 2 (PLEN/15)", ITU-T DRAFT ; STUDY PERIOD 2013-2016, INTERNATIONAL TELECOMMUNICATION UNION, GENEVA ; CH, vol. 15/15, 2 décembre 2013 (2013-12-02), pages 1-213, XP044034812,

**Description**

La présente invention concerne un procédé et un dispositif de détermination d'un coût d'un lien de communication reliant deux noeuds d'un réseau utilisant des communications par courants porteurs.

Il est connu des réseaux maillés utilisant des communications par courants porteurs (*i.e.* Courant Porteur en Ligne (CPL), « PowerLine Communications (PLC) » en terminologie anglo-saxonne). Un réseau maillé comprend un ensemble de noeuds de communication reliés par des liens de communications. Une communication entre deux noeuds d'un réseau maillé nécessite un établissement d'une route de communication, que nous appelons simplement « route » par la suite. Chaque route implique ainsi au moins deux noeuds, et est constituée d'au moins un lien. Il est fréquent que plusieurs routes soient disponibles pour permettre une communication entre deux noeuds d'un réseau maillé. Une sélection, utilisant une méthode de routage, d'une meilleure route parmi les routes disponibles est alors nécessaire. Un critère généralement utilisé dans les méthodes de routage pour déterminer la meilleure route est basé sur une minimisation d'une fonction de coût, la route ayant le coût le plus faible étant considérée comme la meilleure. Ce critère est particulièrement important car il conditionne des performances de la méthode de routage et donc des performances globales d'un réseau maillé.

Le standard G3-PLC (CPL de troisième génération: « Third Generation PLC » en terminologie anglo-saxonne. ITU-T G.9903, Emetteurs/récepteurs CPL utilisant un multiplexage par division de fréquences de bande étroite orthogonales pour CPL de troisième génération, « Narrowband orthogonal frequency division multiplexing power line communication transceivers for G3-PLC networks » en terminologie anglo-saxonne) dans sa version « 02/2014 » intègre une méthode de routage de niveau 3 du modèle OSI (Interconnexion de Système Ouvert (ISO), « Open Systems Interconnexion » en terminologie anglo-saxonne). La méthode de routage du standard G3-PLC repose sur les protocoles de routage LOAD (Protocole de routage léger à la demande basé sur des vecteurs de distances : « Lightweight On-demand Ad hoc Distance-vector routing protocol » en terminologie anglo-saxonne) ou LOADng (Protocole de routage léger à la demande basé sur des vecteurs de distances - prochaine génération : « Lightweight On-demand Ad hoc Distance-vector routing protocol - next generation »). Dans la méthode de routage du standard G3-PLC, le coût d'une route intègre le coût de chaque lien constituant ladite route. Si une route est constituée d'un unique lien, le coût de ladite route est égal au coût dudit lien.

Si une route est constituée de plusieurs liens, le coût de ladite route est égal à une somme des coûts de chaque lien de la route. Le standard G3-PLC propose dans son annexe B, une fonction (1) permettant de calculer un coût *LC* d'un lien reliant un noeud *i* à un noeud *j* :

$$LC = \text{MAX}\left(C_{i \to j}; C_{j \to i}\right) + adpKrt \times \frac{numOfActRoutes}{MaxNumOfActRoutes} + adpKh \quad (1)$$

où *MAX(x,y)* est une fonction prenant le maximum d'une variable *x* et d'une variable *y*, $C_{i \to j}$ et $C_{j \to i}$ sont des coûts de lien directionnel, respectivement dans le sens du noeud *i* au noeud *j* et dans le sens du noeud *j* au noeud *i*, *adpKrt* et *adpKh* sont des coefficients pondérateurs configurables, *numOfActRoutes* est une valeur, dite taux de remplissage, représentative d'un nombre de routes sauvegardées dans une table de routage du noeud calculant le coût du lien et *MaxNumOfActRoutes* est une capacité maximale de la table de routage du noeud calculant le coût du lien. On note que la valeur de la capacité maximale *MaxNumOfActRoutes* n'est pas dictée par le standard G3-PLC mais peut être fixée librement par chaque constructeur.

Un coût de lien directionnel *directionalLinkCost* est donné par la fonction suivante :

$$directionalLinkCost = adpKr \times MOD_{Kr} + adpKm \times MOD_{Km}$$
$$+ adpKc \times \frac{(MaximumNumberOfTones - numberOfActiveTones)}{MaximumNumberOfActiveTones}$$
$$+ adpKq \times \frac{(MaximumLQI - lqi)}{MaximumLQI}$$

où *adpKr, adpKm, adpKc* et *adpKq* sont des coefficients pondérateurs configurables, $MOD_{Kr}$ et $MOD_{Km}$ dépendent d'une modulation utilisée pour communiquer entre le noeud *i* et le noeud *j*, *numberOfActiveTones* est une métrique représentative d'un nombre de sous bandes utilisées pour communiquer entre le noeud *i* et le noeud *j*, *MaximumNumberOfActiveTones* est un nombre maximum de sous bandes utilisables pour communiquer entre le noeud *i* et le noeud *j*, *lqi* est une valeur d'une métrique représentative d'une qualité du lien de communication, *MaximumLQI* est une valeur maximum pouvant être prise par la métrique représentative de la qualité du lien de communication. On note que la valeur du nombre maximum de sous-bandes *MaximumNumberOfActiveTones* est dictée par le standard G3-PLC et dépend d'une bande de fréquences utilisée.

De manière simplifiée, le coût LC d'un lien peut s'écrire comme une somme de coût unitaire :

$$LC = LC_h + LC_q + LC_m + LC_c + LC_{rt} \quad (2)$$

avec :

$LC_h$ = adpKh,

$$LC_q = adpKq \times \frac{(MaximumLQI - lqi)}{MaximumLQI},$$

$LC_m$ = adpKr × $MOD_{Kr}$ + adpKm × $MOD_{Km}$,

$$LC_c = adpKc \times \frac{(MaximumNumberOfTones - numberOfActiveTones)}{MaximumNumberOfActiveTones},$$

et, $$LC_{rt} = adpKrt \times \frac{numOfActRoutes}{MaxNumOfActRoutes}.$$

Chaque coût unitaire est un entier normalisé appartenant à un ensemble de valeurs allant de la valeur « 0 », à une valeur dépendant du (ou des) coefficient(s) pondérateur(s) associé(s) audit coût. Par exemple, la métrique de qualité *lqi* utilisée dans le calcul du coût unitaire $LC_q$, est une métrique représentative d'un rapport signal sur bruit (« Signal to noise ratio (SNR) » en terminologie anglo-saxonne) associée au lien reliant le noeud *i* à au noeud *j*. Les valeurs de la métrique de qualité *lqi* sont comprises, avant normalisation, dans une plage prédéfinie de valeurs théoriques comprenant « 256 » valeurs comprises entre la valeur « 0 » et la valeur « 255 » telle que la valeur « 0 » correspond à un SNR de -10dB, et la valeur « 255 » correspond à un SNR de 53,75dB. Une valeur typique de *adpKq* conseillée par le standard G3-PLC est la valeur « 10 ». Puisque le coût unitaire $LC_q$ est un entier, les « 256 » valeurs pouvant être théoriquement prises par la métrique de qualité *lqi,* ne permettent d'obtenir que dix valeurs différentes du coût unitaire $LC_q$.

Chaque coût unitaire constituant le coût du lien entre le noeud *i* et le noeud *j* possède un comportement similaire au coût unitaire $LC_q$ correspondant à la métrique de qualité *lqi*. En effet, chaque coût unitaire peut prendre une valeur dans un ensemble comprenant un nombre très limité de valeurs différentes alors que pour certains coûts unitaires, la métrique utilisée dans le calcul dudit coût unitaire (telle que, par exemple, la métrique *numOfActRoutes* et la métrique *numberOfActiveTones*) prend des valeurs dans une plage prédéfinie de valeurs (pouvant prendre des valeurs allant de la valeur « 0 » jusqu'à la valeur «*MaxNumOfActRoutes*» pour la métrique *numOfActRoutes* et de la valeur « 0 » à la valeur *« MaximumNumberOfActiveTones* » pour la métrique *numberOfActiveTones*). Un tel comportement des coûts unitaires a pour conséquence d'engendrer des coûts de lien ayant une granularité grossière comportant très peu de valeurs différentes. Les coûts de route étant des sommes de coûts de lien, les coûts de route calculés à partir de la fonction (1) proposée par le standard G3-PLC ont eux aussi une granularité grossière.

La granularité des coûts de route a un impact direct sur les performances d'une méthode de routage. En effet, une granularité de coûts de route grossière ne permet pas de discriminer des routes ayant pourtant des caractéristiques différentes. Inversement, une granularité de coût de route fine, permet de discriminer plus facilement les routes, mais peut engendrer un coût calculatoire plus important. Par exemple, la granularité grossière des valeurs du coût unitaire $LC_q$ tel que calculé avec la fonction (1) proposée par le standard G3-PLC dans sa version « 02/2014 » implique que des routes associées à des valeurs de la métrique de qualité *lqi* proches ne peuvent être discriminées par la méthode de routage. La route sélectionnée par l'algorithme de routage n'est alors pas forcément la meilleure.

Il est souhaitable de pallier ces différents inconvénients de l'état de la technique.

D'une manière générale, il est souhaitable de fournir une solution qui permette d'utiliser la granularité des coûts de route à bon escient, ce qui permet d'améliorer les performances d'une méthode de routage sans augmenter la complexité de ladite méthode de routage.

Le document US 2012/0182881 A1 divulgue des systèmes et procédés de routage de protocoles pour communication par courants porteurs en ligne.

Le document US 2012/0008503 A1 divulgue un procédé de routage permettant le partage de la charge entre des liens sur tout le réseau.

L'invention est définie par le procédé de détermination d'un coût d'un lien de communication selon la revendication 1, le dispositif de détermination d'un coût d'un lien de communication selon la revendication 9, le produit programme d'ordinateur selon la revendication 10 et les moyens de stockage selon la revendication 11.

Les revendications dépendantes définissent des modes de réalisation, en particulier les revendications 7 et 8 qui définissent des procédés de sélection d'une route de communication comprenant les limitations de la revendication 1.

Selon un premier aspect de la présente invention, la présente invention concerne un procédé de détermination d'un coût LC d'un lien de communication, dit lien courant, reliant deux noeuds d'un réseau maillé utilisant des communications par courants porteurs, le procédé étant utilisé dans une procédure apte à sélectionner une route de communication parmi une pluralité de routes de communication dans le réseau maillé, chaque route étant constituée d'au moins un lien de communication, ledit lien courant étant associé à au moins une métrique comprise dans une plage prédéfinie de valeurs et permettant de déterminer un coût unitaire dudit lien courant correspondant à ladite métrique, le coût LC du lien courant dépendant du coût unitaire correspondant à chaque métrique associée au lien courant, le procédé comprenant, pour au moins un coût unitaire dudit lien courant, les étapes suivantes, lorsqu'il est mis en oeuvre par l'un desdits deux noeuds du réseau maillé: obtenir au moins une sous-partie de la plage prédéfinie de valeurs de ladite métrique correspondant audit coût unitaire, ladite sous-partie étant telle que, lorsque deux routes de communication différentes comprennent deux liens de communications différents associés chacun à une valeur de ladite métrique comprise dans la sous-partie, les valeurs de ladite métrique associées auxdits deux liens de communication sont considérées comme non discriminantes pour sélectionner une parmi les deux routes de communication ; et, calculer ledit coût unitaire dudit lien courant en utilisant une fonction reliant ledit coût unitaire à la métrique correspondante, la fonction étant telle que seules des valeurs de ladite métrique n'appartenant pas à ladite sous-partie produisent des variations dudit coût unitaire ; le procédé comprend en outre l'étape suivante :déterminer le coût LC du lien courant en fonction de chaque coût unitaire calculé.

De cette manière, la granularité de chaque coût unitaire est utilisée à bon escient puisque seules les valeurs des métriques appartenant à des plages de valeurs discriminantes produisent des variations des coûts unitaires. Les coûts de route obtenus à partir des coûts unitaires ont alors une granularité plus fine sur les plages de valeurs des métriques ayant un réel impact sur une qualité de communication. Un processus de sélection de route de communication utilisant de tels coûts de route est par conséquent plus performant.

Selon un mode de réalisation particulier, une métrique, dite métrique de qualité, est représentative d'une qualité du lien de communication, et, pour un coût unitaire LCq correspondant à la métrique de qualité, au moins deux sous-parties de la plage prédéfinie de valeurs sont obtenues comprenant : une première sous partie correspondant à des valeurs de la métrique de qualité inférieure à une qualité minimum telle que toute valeur de la métrique de qualité inférieure à la qualité minimum est considérée insuffisante pour permettre une communication fiable ; et, une seconde sous partie correspondant à des valeurs de la métrique de qualité supérieure à une qualité maximum telle que toute valeur de la métrique de qualité supérieure à la qualité maximum est considérée suffisante pour permettre une communication très fiable.

De cette manière, seules les valeurs discriminantes de la métrique de qualité produisent des variations du coût unitaire $LCq$.

Selon un mode de réalisation particulier, le coût unitaire $LCq$ correspondant à la métrique de qualité est calculé de la manière suivante :

$$LCq = adpKq \times MAX\left(0; MIN\left(1; \frac{\left((LQI_{strong} - LQI_{weak}) - (lqi - LQI_{weak})\right)}{(LQI_{strong} - LQI_{weak})}\right)\right)$$

où $MAX(x,y)$ est une fonction prenant le maximum d'une variable $x$ et d'une variable $y$, $adpKq$ est un coefficient pondérateur configurable, $lqi$ est une valeur de la métrique de qualité, $LQI_{strong}$ est la valeur de qualité maximum, $LQI_{weak}$ est la valeur de qualité minimum.

Selon un mode de réalisation, une métrique, dite taux de remplissage, est représentative d'un niveau de remplissage d'une table de routage du noeud de communication mettant en oeuvre le procédé, et, pour un coût unitaire $LCrt$ correspondant au taux de remplissage, une sous-partie de la plage prédéfinie de valeurs est obtenue et correspond à des valeurs de taux de remplissage inférieures à un seuil de début de saturation en deçà duquel ladite table de routage est considérée comme vide.

De cette manière, seules les valeurs discriminantes du taux de remplissage produisent des variations du coût unitaire $LCrt$.

Selon un mode de réalisation particulier, le coût unitaire $LCrt$ correspondant au taux de remplissage est calculé de la manière suivante :

$$LCrt = adpKrt \times MAX\left(0; \left(\frac{numOfActRoutes - SaturationThreshold}{MaxNumOfActRoutes - SaturationThreshold}\right)\right)$$

où *MAX(x,y)* est une fonction prenant le maximum d'une variable *x* et d'une variable *y, MIN(x,y)* est une fonction prenant le minimum d'une variable *x* et d'une variable *y, adpKrt* est un coefficient pondérateur configurable, *numOfActRoutes* est une valeur du taux de remplissage de ladite table de routage, *MaxNumOfActRoutes* est une valeur représentative d'une capacité maximale de ladite table de routage et *SaturationThreshold* est le seuil de début de saturation.

Selon un mode de réalisation particulier, chaque communication réalisée dans le réseau maillé utilise le standard ITU-T G.9903, et le coût LC du lien courant est calculé de la manière suivante:

$$LC = LCh + LCq + LCm + LCc + LCrt$$

où *LCh* est un premier coût unitaire égal à un facteur de pondération *adpKh, LCm* est un deuxième coût unitaire fonction d'une modulation utilisée par lesdits deux noeuds du réseau maillé pour communiquer et *LCc* est un troisième coût unitaire fonction d'un nombre de sous-bandes utilisées par lesdits deux noeuds du réseau maillé pour communiquer, les premier, deuxième et troisième coûts unitaires étant spécifiés par le standard ITU-T G.9903.

Le procédé est donc compatible avec le standard ITU-T G.9903.

Selon un deuxième aspect de la présente invention, la présente invention concerne un procédé de sélection d'une route de communication parmi une pluralité de routes de communication reliant un noeud source à un noeud récepteur dans un réseau maillé utilisant des communications par courants porteurs, le réseau maillé comprenant un ensemble de noeuds de communication reliés par des liens de communication, le procédé étant mis en oeuvre par le noeud source, le procédé comprenant : transmettre à l'ensemble des noeuds du réseau maillé une demande de recherche de route, de sorte à provoquer une évaluation d'un coût de route pour chaque route de ladite pluralité de routes, ladite évaluation comprenant dans chaque noeud impliqué dans l'une des routes de ladite pluralité de routes, la mise en oeuvre du procédé selon le premier aspect; et, recevoir du noeud récepteur des informations représentatives d'une route sélectionnée par ledit noeud récepteur à partir des coûts de route évalués, la route sélectionnée étant la route de communication associée à un coût de route minimum.

Selon un troisième aspect de la présente invention, la présente invention concerne un procédé de sélection d'une route de communication parmi une pluralité de routes de communication reliant un noeud source à un noeud récepteur dans un réseau maillé utilisant des communications par courants porteurs, le réseau maillé comprenant un ensemble de noeuds de communication reliés par des liens de communication, le procédé étant mis en oeuvre par le noeud récepteur, le procédé comprenant : rechercher un coût de route minimal parmi un ensemble de coûts de route reçu par le noeud récepteur, les coûts de route ayant été évalués par des noeuds du réseau maillé impliqués dans l'une des routes de communication de ladite pluralité de routes suite à une transmission par le noeud source d'une demande de recherche de route à l'ensemble des noeuds du réseau maillé, ladite évaluation comprenant dans chaque noeud impliqué dans l'une des routes de ladite pluralité de routes, la mise en oeuvre du procédé selon le premier aspect ; et, transmettre au noeud source des informations représentatives d'une route sélectionnée, la route sélectionnée étant une route de communication associée au coût de route minimal.

Selon un quatrième aspect de la présente invention, la présente invention concerne un dispositif de détermination d'un coût *LC* d'un lien de communication, dit lien courant, reliant deux noeuds d'un réseau maillé utilisant des communications par courants porteurs, le dispositif étant utilisé pour sélectionner une route de communication parmi une pluralité de routes de communication dans le réseau maillé, chaque route étant constituée d'au moins un lien de communication, ledit lien courant étant associé à au moins une métrique comprise dans une plage prédéfinie de valeurs et permettant de déterminer un coût unitaire dudit lien courant correspondant à ladite métrique, le coût *LC* du lien courant dépendant du coût unitaire correspondant à chaque métrique associée au lien courant, le dispositif comprenant: des moyens pour obtenir au moins une sous-partie de la plage prédéfinie de valeurs de ladite métrique correspondant audit coût unitaire, ladite sous-partie étant telle que, lorsque deux routes de communication différentes comprennent deux liens de communications différents associés chacun à une valeur de ladite métrique comprise dans la sous-partie, les valeurs de ladite métrique associées auxdits deux liens de communication sont considérées comme non discriminantes pour sélectionner une parmi les deux routes de communication ; des moyens pour calculer ledit coût unitaire dudit lien courant en utilisant une fonction reliant ledit coût unitaire à la métrique correspondante, la fonction étant telle que seules des valeurs de ladite métrique n'appartenant pas à ladite sous-partie produisent des variations dudit coût unitaire ; des moyens pour déterminer le coût *LC* du lien courant en fonction de chaque coût unitaire calculé.

Selon un cinquième aspect de la présente invention, la présente invention concerne un produit programme d'ordinateur comportant des instructions pour mettre en oeuvre, par un dispositif, le procédé selon le premier aspect par un processeur du dispositif.

Selon un sixième aspect de la présente invention, la présente invention concerne des moyens de stockage, stockant un programme d'ordinateur comportant des instructions pour mettre en oeuvre, par un dispositif, le procédé selon le premier aspect lorsque ledit programme est exécuté par un processeur du dispositif.

Les caractéristiques de la présente invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un exemple de réseau maillé utilisant des communications par courants porteurs ;
- la Fig. 2 illustre schématiquement une architecture matérielle d'un noeud de communication apte à mettre en oeuvre l'invention ;
- la Fig. 3 illustre schématiquement un procédé, mis en oeuvre par un premier noeud de communication selon l'invention, lors d'une transmission de données à destination d'un second noeud de communication selon l'invention ;
- la Fig. 4 illustre schématiquement un procédé, mis en oeuvre par un noeud de communication selon l'invention dans le réseau maillé, lors d'un calcul d'un coût de route, et
- la Fig. 5 illustre schématiquement un procédé, mis en oeuvre par un noeud de communication selon l'invention dans le réseau maillé, lors d'un calcul d'un coût de lien.

La description détaillée ci-après s'attache à décrire différents modes de réalisation de la présente invention dans un contexte de réseaux maillés utilisant des communications par courants porteurs compatibles avec le standard G3-PLC dans sa version « 02/2014 ». Les principes de la présente invention s'appliquent cependant dans un contexte plus large de réseaux maillés utilisant des communications par courants porteurs. Les principes de la présente invention sont en effet applicables dès qu'une méthode de routage de niveau 3 du modèle OSI basée sur des calculs de coûts de route n'utilise pas à bon escient la granularité de métriques représentatives desdites routes ou des liens constituant lesdites routes pour discriminer les routes.

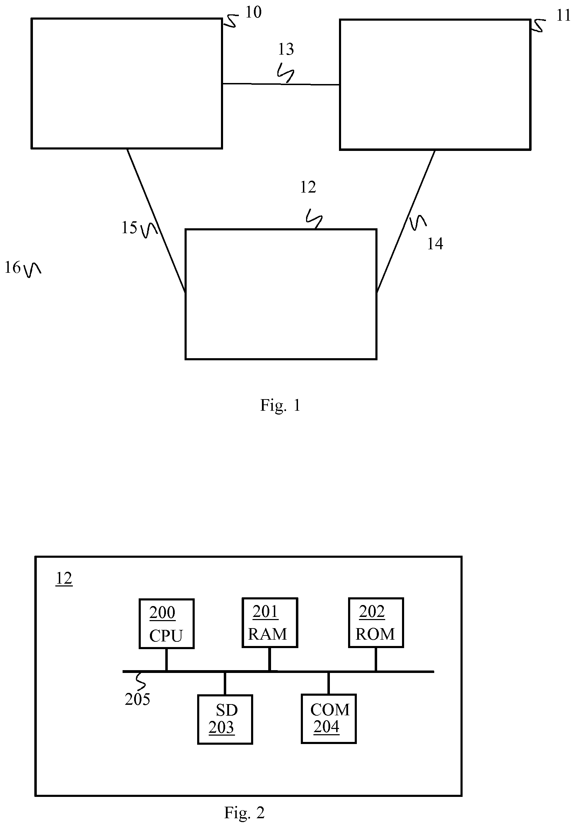

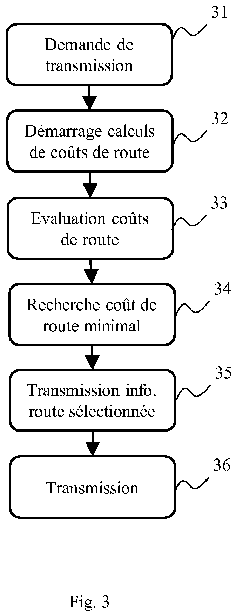

La **Fig. 1** illustre schématiquement un exemple de réseau maillé 16 utilisant des communications par courants porteurs. Le réseau maillé 16 comprend trois noeuds 10, 11 et 12. Chaque noeud peut être un dispositif apte à communiquer selon un mode de communication par courants porteurs compatible avec le standard G3-PLC, comme, par exemple, un compteur électrique communicant ou un adaptateur CPL. Les noeuds 10 et 11 sont reliés par un lien 13. Chaque lien mentionné par la suite est un lien logique pouvant utiliser un ou plusieurs liens physiques. Les noeuds 10 et 12 sont reliés par un lien 15. Les noeuds 12 et 11 sont reliés par un lien 14. Chaque noeud peut communiquer avec un autre noeud suivant deux routes. Par exemple, le noeud 10 peut transmettre des données au noeud 11 en utilisant une première route constituée du lien 13, ou une seconde route constituée des liens 15 et 14. Lors de la mise en oeuvre de la méthode de routage du standard G3-PLC, le coût de chaque lien constituant une route permettant de communiquer entre les noeuds 10 et 11 est calculé selon un procédé décrit en relation avec les Figs. 3, 4 et 5, ce qui permet d'évaluer le coût de chaque route. La route associée au coût de route le plus faible est alors sélectionnée.

La **Fig. 2** illustre schématiquement une architecture matérielle d'un noeud de communication apte à mettre en oeuvre l'invention. Dans la Fig. 2, nous prenons l'exemple du noeud 12 du réseau maillé 16. Les noeuds 10 et 11 utilisent toutefois une architecture matérielle identique.

Selon l'exemple d'architecture matérielle représenté à la Fig. 2, le noeud 12 comprend alors, reliés par un bus de communication 205 : un processeur ou CPU (« Central Processing Unit » en anglais) 200 ; une mémoire vive RAM (« Random Access Memory » en anglais) 201 ; une mémoire morte ROM (« Read Only Memory » en anglais) 202 ; une unité de stockage telle qu'un disque dur ou un lecteur de support de stockage, tel qu'un lecteur de cartes SD (« Secure Digital » en anglais) 203 ; au moins une interface de communication 204 permettant au noeud 12 de communiquer avec d'autres noeuds du réseau maillé 16 tels que les noeuds 11 ou 10 ou avec des dispositifs communiquant connectés au noeud tels qu'un ordinateur, une tablette, un téléphone intelligent ou un décodeur de programmes télévisuels.

Le processeur 200 est capable d'exécuter des instructions chargées dans la RAM 201 à partir de la ROM 202, d'une mémoire externe (non représentée), d'un support de stockage (tel qu'une carte SD), ou d'un réseau de communication. Lorsque le noeud 12 est mis sous tension, le processeur 200 est capable de lire de la RAM 201 des instructions et de les exécuter. Ces instructions forment un programme d'ordinateur causant la mise en oeuvre, par le processeur 200, de tout ou partie des algorithmes et étapes décrits ci-après en relation avec les Figs. 3, 4 et 5.

Tout ou partie des algorithmes et étapes décrits ci-après en relation avec les Figs. 3, 4 et 5 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La **Fig. 3** illustre schématiquement un procédé, mis en oeuvre par un premier noeud de communication selon l'invention, lors d'une transmission de données à destination d'un second noeud de communication selon l'invention. On suppose ici que le procédé est mis en oeuvre dans le cadre de l'exemple de transmission de données entre le noeud 10, dit noeud source 10, et le noeud 11, dit noeud récepteur 11, décrit en relation avec la Fig. 1.

Le procédé de la Fig. 3 débute, lors d'une étape 31, par une réception, par le noeud source 10, d'une demande de transmission de données. Cette demande peut émaner, par exemple, d'un utilisateur utilisant un dispositif connecté au noeud source 10, tel qu'un ordinateur ou du noeud source 10 lui-même, lorsque le noeud source 10 est, par exemple, un compteur électrique communicant qui transmet automatiquement des données de consommation électrique à un équipement de contrôle ou un équipement de contrôle cherchant à requérir des données de consommation stockées dans un compteur électrique communicant.

Suite à la réception de la demande de transmission de données, dans une étape 32, le noeud 10 lance une évaluation d'un coût de route pour chaque route permettant de communiquer entre le noeud source 10 et le noeud récepteur 11.

Lors d'une étape 33, les coûts de route sont calculés de proche en proche par chaque noeud impliqué dans une route permettant de communiquer entre le noeud source 10 et le noeud récepteur 11.

Dans l'exemple de la Fig. 1, le noeud source 10 transmet une demande de calcul de route pour joindre le noeud récepteur 11, contenant un coût partiel de route nul. Cette demande est envoyée en mode multidiffusion (« broadcast » en terminologie anglo-saxonne). Le noeud récepteur 11 reçoit cette demande et la traite pour calculer un coût de route d'une première route. Le noeud récepteur 11 calcule un coût de lien pour le lien 13, ajoute le coût de lien calculé au coût partiel de route contenu dans le demande et stocke une information représentative du coût de route de la première route en mémoire car il est le noeud final de la première route.

Puisqu'une seconde route (la route constituée du lien 15 et du lien 14) existe entre le noeud 10 et le noeud 11, via le noeud 12, ce dernier reçoit la demande de calcul de route envoyée par le noeud 10, en mode multidiffusion, et la traite. Lorsque le noeud 12 reçoit ladite demande, le noeud 12 calcule un coût de lien pour le lien 15, ajoute le coût de lien ainsi calculé à un coût partiel de route contenu dans la demande et, puisqu'il n'est pas le noeud final de la seconde route, transmet une information représentative du coût partiel de route de la seconde route, ainsi mis à jour, au noeud récepteur 11 dans une demande de calcul de route. Lorsque le noeud récepteur 11 reçoit cette demande, le noeud récepteur 11 calcule un coût de lien pour le lien 14, ajoute le coût de lien ainsi calculé au coût partiel de route contenu dans la demande et stocke une information représentative du coût de la seconde route en mémoire car il est le noeud final de la seconde route.

Lorsque le coût de route de chaque route reliant le noeud source 10 au noeud récepteur 11 est reçu, lors d'une étape 34, le noeud récepteur 11 recherche un coût minimal parmi les coûts de route reçus. La route associée au coût de route minimal est alors sélectionnée par le noeud récepteur 11. Dans une étape 35, le noeud récepteur 11 transmet une information représentative de la route sélectionnée lors de l'étape 34 au noeud source 10 en utilisant la route sélectionnée. Lors d'une étape 36, le noeud source utilise la route sélectionnée pour effectuer la transmission de données à destination du noeud récepteur 11.

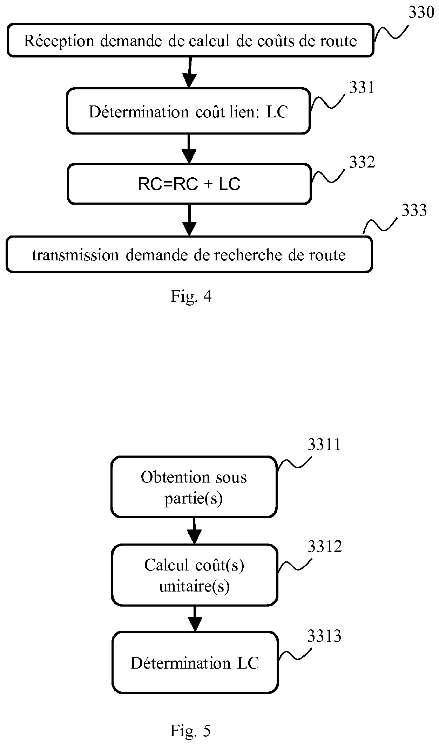

La **Fig. 4** illustre schématiquement un procédé, mis en oeuvre par un noeud de communication selon l'invention dans le réseau maillé 16, lors d'un calcul de coûts de route. La Fig. 4 détaille une contribution d'un noeud du réseau maillé 16 à une réalisation de l'étape 33 d'évaluation de coûts de route. Nous décrivons ce procédé en prenant pour exemple le noeud 12. Ce procédé est appliqué de la même manière par le noeud source 11.

Le procédé débute lors d'une étape 330 par une obtention par le noeud 12 d'une demande de calcul de coûts de route. Cette demande est reçue d'un autre noeud par l'intermédiaire de l'interface de communication 204 du noeud et contient une information représentative d'un coût partiel de route.

Dans une étape 331, le coût *LC* du lien par lequel a été reçue la demande de calcul de route) est calculé selon un procédé décrit en relation avec la Fig. 5. Dans l'exemple de la Fig. 1, le noeud 12 calcule le coût du lien 15. Le noeud 11, quant à lui, calcule le coût du lien 14 et le coût du lien 13.

Dans une étape 332, le noeud 12 ajoute le coût LC du lien par lequel a été reçue la demande de calcul de route à un coût de route *RC* correspondant au coût partiel de route reçu par le noeud 12 dans la demande de calcul de route, de manière à mettre à jour ce coût de route. Dans l'exemple de la Fig. 1, le noeud 12 ajoute le coût du lien 15 au coût partiel de route reçu lors de l'étape 330 dans la demande de calcul de route. Le noeud 11, quant à lui, ajoute le coût du lien 14 au coût partiel de route contenu dans le demande de calcul de route reçue par l'intermédiaire du lien 14, et ajoute le coût du lien 13 au coût partiel de route contenu dans la demande de calcul de route reçue par l'intermédiaire du lien 13.

Suite à la mise à jour du coût partiel de route, le noeud 12 transmet, dans une étape 333, une demande de calcul de route en mode multidiffusion. Lorsqu'un noeud est un dernier noeud d'une route, le dernier noeud ne transmet pas de demande de calcul de route. Dans l'exemple de la Fig. 1, le noeud 11 collecte les coûts partiels de route calculés pour chacune des routes menant au noeud 11 et met à jour ces coûts partiels de route pour obtenir le coût de chacune des routes. Ces coûts de route sont ensuite utilisés lors de l'étape 34.

La **Fig. 5** illustre schématiquement un procédé, mis en oeuvre par un noeud de communication selon l'invention dans le réseau maillé 16, lors d'un calcul d'un coût de lien. Ce procédé est mis en oeuvre par le noeud source 11 et le noeud 12 pour chaque calcul d'un coût de lien *LC* d'un lien lors de l'étape 331. Ce procédé est basé sur une hypothèse générale qui est que les plages de valeurs des métriques permettant de calculer le coût d'un lien comportent des sous parties d'importances inégales. Dans le cadre de l'invention, lorsque deux routes différentes comprennent deux liens différents associés chacun à une valeur de ladite métrique comprise dans une sous partie de faible importance, les valeurs de ladite métrique associées auxdits deux liens sont considérées comme non discriminantes pour sélectionner une des deux routes. En d'autres termes, deux valeurs différentes d'une métrique comprises dans une sous partie de faible importance ne sont pas synonymes de différences notables de qualité de communication. Inversement, deux valeurs différentes d'une métrique, dont une au moins est comprise dans une sous partie d'importance élevée, sont synonymes de différences notables de qualité de communication.

L'invention prend en compte cette hypothèse pour améliorer la fonction permettant de calculer des coûts de lien fournie par le standard G3-PLC dans sa version « 02/2014 ». De cette manière, le calcul des coûts de route est amélioré, ce qui permet d'améliorer la méthode de routage de niveau 3 du standard G3-PLC. Comme nous le décrivons par la suite, la fonction permettant de calculer certains coûts unitaires est modifiée, de manière à ce que seules des valeurs de métrique n'appartenant pas à une sous partie de faible importance de la plage de valeurs de ladite métrique provoquent des variations dudit coût unitaire.

Dans un mode de réalisation, la fonction permettant de calculer le coût unitaire $LC_q$ en fonction de la métrique de qualité $lqi$ est modifiée.

On peut noter que le standard G3-PLC indique que tout lien associé à une valeur de $lqi$ inférieure à une valeur de qualité minimum $lqi_{weak}$ doit être, si possible, évité. Le standard fixe une valeur par défaut $lqi_{weak}$ = 52 correspondant à un SNR de 3dB. Il est considéré en effet que toute qualité de transmission inférieure à 3dB est trop faible pour permettre une communication acceptable. Il y a donc peu d'intérêt à discriminer des liens associés à une valeur de la métrique de qualité $lqi$ inférieure à $lqi_{weak}$, puisqu'aucun des deux liens n'est apte à fournir une qualité de communication acceptable.

Il ressort par ailleurs d'expériences menées sur des réseaux maillés utilisant des communications par courants porteurs, que deux liens associés à des valeurs de la métrique de qualité $lqi$ différentes, supérieures à une valeur $lqi_{strong}$ = 100 correspondant à un SNR de 15dB, permettent d'obtenir une qualité de communication quasi-identique. Il n'est alors pas nécessaire de discriminer deux liens associés à des valeurs de LQI supérieures à $lqi_{strong}$ puisque cela reviendrait à discriminer deux très bons liens.

On constate donc qu'il est possible de décomposer la plage de valeurs de la métrique de qualité $lqi$ en deux sous parties de faible importance et une sous partie d'importance élevée. Une première sous partie de faible importance est comprise entre la valeur « 0 » et une valeur $LQI_{weak}$. Une seconde sous partie de faible importance est comprise entre une valeur $LQI_{strong}$ et la valeur « 255 ». La partie d'importance élevée est comprise entre les valeurs $LQI_{weak}$ et $LQI_{strong}$.

La fonction permettant de calculer du coût unitaire $LC_q$ devient alors :

$$LCq = adpKq \times MAX\left(0; MIN\left(1; \frac{\left((LQI_{strong} - LQI_{weak}) - (lqi - LQI_{weak})\right)}{(LQI_{strong} - LQI_{weak})}\right)\right)(3)$$

où $MIN(x,y)$ est une fonction prenant le minimum d'une variable $x$ et d'une variable $y$. Cette fonction est telle que seules les valeurs de la métrique de qualité $lqi$ comprises entre $LQI_{weak}$ et $LQI_{strong}$ provoquent des variations du coût unitaire $LCq$. On remarque que la granularité du coût unitaire $LCq$ n'est pas modifiée, mais qu'elle est utilisée à bon escient puisque seules des valeurs de la métrique de qualité $lqi$ appartenant à une sous partie importante provoquent des variations du coût unitaire $LCq$.

Dans un mode de réalisation, la fonction permettant de calculer le coût unitaire $LC_{rt}$ est modifiée. La fonction permettant de calculer le coût unitaire $LC_{rt}$ fournie par le standard G3-PLC dans sa version « 02/2014 » pénalise les liens reliant des noeuds dont la table de routage est partiellement ou totalement remplie. Dans la pratique, un certain taux de remplissage est normal et il n'est pas justifié de pénaliser des liens tant que le taux de remplissage des tables de routage des noeuds qu'ils relient n'a pas atteint une valeur *SaturationThreshold* représentative d'un seuil de début de saturation de la table de routage. Toute valeur de taux de remplissage *numOfActRoutes* appartenant à une sous partie de la plage de valeurs du taux de remplissage *numOfActRoutes* inférieure à la valeur *SaturationThreshold* est considérée comme normale. Il y a peu d'intérêt à discriminer des liens associés à des taux de remplissage *numOfActRoutes* inférieurs à la valeur *SaturationThreshold,* puisque de tels taux de remplissage n'ont aucun effet sur la qualité de communication à travers ces liens. Dans ce cas, on considère que des liens associés à des taux de remplissage *numOfActRoutes* inférieurs à la valeur *SaturationThreshold* se comportent comme des liens associés à des tables de routage vides. Cette sous partie de la plage de valeurs du taux de remplissage *numOfActRoutes* est donc de faible importance.

En revanche, il est important d'éviter la saturation des tables de routage des noeuds dans un réseau maillé. En effet, une saturation de la table de routage d'un noeud dans un réseau maillé, peut, par effet domino, entraîner une saturation des tables de routage d'autres noeuds et ainsi provoquer des suppressions intempestives dans les tables de routage, d'entrées de routage, et notamment des entrées de routage les plus anciennement utilisées. Il est donc important de discriminer les liens ayant un taux de remplissage supérieur à la valeur *SaturationThreshold* pour pouvoir privilégier les liens les moins saturés. La sous partie de la plage de valeurs du taux de remplissage *numOfActRoutes* comprise entre la valeur *SaturationThreshold* et la capacité maximale de la table de routage *MaxNumOfActRoutes* est donc d'importance élevée.

La fonction permettant de calculer le coût unitaire $LC_{rt}$ devient alors :

$$LCrt = adpKrt \times MAX\left(0; \left(\frac{numOfActRoutes - SaturationThreshold}{MaxNumOfActRoutes - SaturationThreshold}\right)\right) (4)$$

où le taux de remplissage *numOfActRoutes* du noeud calculant le coût unitaire *LCrt* est pris en compte. Toute valeur du taux de remplissage *numOfActRoutes* inférieure à la valeur *SaturationThreshold* produit un coût unitaire *LCrt* nul. En revanche, le coût unitaire *LCrt* augmente de manière linéaire entre la valeur *SaturationThreshold* et la capacité maximale de la table de routage *MaxNumOfActRoutes.*

Il ressort d'expériences menées sur des réseaux maillés utilisant des communications par courants porteurs, que, par exemple, pour une capacité *numOfActRoutes* = 100, des taux de remplissage inférieurs à une valeur *SatThreshold* = 80 (représentative d'un taux de remplissage de 80%) sont normaux.

On remarque que la granularité du coût unitaire *LCrt* n'est pas modifiée, mais qu'elle est utilisée à bon escient puisque seules des valeurs du taux de remplissage *numOfActRoutes* appartenant à une sous partie importante provoquent des variations du coût unitaire *LCrt*.

Dans d'autres modes de réalisation, une approche similaire d'identification de sous parties d'importance élevée et de sous parties peu importantes de plages de valeurs est appliquée à d'autres métriques représentatives d'un lien, telles que par exemple la métrique *numberOfActiveTones* représentative d'un nombre de sous bandes utilisées pour communiquer entre le noeud *i* et le noeud *j*. On peut remarquer que lorsqu'un nombre de sous bandes est trop faible, inférieur à un seuil *ActiveTonesThreshold,* la qualité de communication entre le noeud *i* et le noeud *j* est inacceptable. Il n'y a donc pas d'intérêt à tenter de discriminer deux liens associés à des valeurs de la métrique *numberOfActiveTones* inférieure au seuil *ActiveTonesThreshold.* La sous partie de la plage de valeurs de la métrique *numberOfActiveTones* inférieure au seuil *ActiveTonesThreshold* est donc de faible importance. En revanche, au-delà du seuil *ActiveTonesThreshold,* chaque incrément de la valeur de la métrique *numberOfActiveTones* a un impact bénéfique sur la qualité de communication entre le noeud *i* et le noeud *j.* La sous partie de la plage de valeurs de la métrique *numberOfActiveTones* supérieure au seuil *ActiveTonesThreshold* est donc d'importance élevée. La fonction permettant de calculer le coût unitaire $LC_c$ peut donc être modifiée pour prendre en compte l'existence de ces deux sous parties et ainsi permettre d'utiliser à bon escient la granularité du coût unitaire $LC_c$.

Il ressort d'expériences menées sur des réseaux maillés utilisant des communications par courants porteurs, qu'une valeur de *numberOfActiveTones* inférieure à un seuil *ActTonesThreshold* = 42,5 (représentatif d'un nombre de sous bandes égal à un sixième des sous bandes disponibles) produit des communications de qualité inacceptable.

Le procédé décrit en relation avec la Fig. 5 débute par une étape 3311 au cours de laquelle des sous parties des plages de valeurs de certaines métriques représentatives du lien *l* sont obtenues. Ces sous parties comprennent au moins une sous partie peu importante et au moins une sous partie d'importance élevée. Des informations représentatives de ces sous parties peuvent avoir été déterminées au préalable par un opérateur et stockées dans une mémoire du noeud mettant en oeuvre le procédé de calcul du coût de lien *LC* ou déterminées lors de la mise en oeuvre du procédé.

Dans un mode de réalisation, des valeurs représentatives de sous parties de la plage de valeurs de la métrique de qualité *lqi* sont obtenues. Les valeurs représentatives des sous parties de la plage de valeurs de la métrique de qualité *lqi* sont les valeurs $LQI_{weak}$ et $LQI_{strong}$.

Dans un mode de réalisation, la valeur $LQI_{weak}$ (resp. $LQI_{strong}$) est une valeur supérieure à la valeur « 0 » (resp. inférieure à la valeur « 255 ») et inférieure à la valeur $lqi_{weak}$ (resp. supérieure à la valeur $lqi_{strong}$).

Dans un mode de réalisation, la valeur $LQI_{weak}$ (resp. $LQI_{strong}$) est une valeur proche de la valeur $lqi_{weak}$ (resp. $lqi_{strong}$) ou égale à la valeur $lqi_{weak}$ (resp. $lqi_{strong}$).

Dans un mode de réalisation, des valeurs représentatives de sous parties de la plage de valeurs du taux de remplissage *numOfActRoutes* sont obtenues. Dans ce cas, la valeur *SaturationThreshold* est représentative d'une sous partie de faible importance et d'une sous partie d'importance élevée de la plage de valeurs du taux de remplissage *numOfActRoutes.*

Dans un mode de réalisation, la valeur *SaturationThreshold* est une valeur supérieure à la valeur « 0 » et inférieure à la valeur *SatThreshold.*

Dans un mode de réalisation, la valeur *SaturationThreshold* est une valeur proche de la valeur *SatThreshold* ou égale à la valeur *SatThreshold*

Dans un mode de réalisation, des valeurs représentatives de sous parties de la plage de valeurs de la métrique *numberOfActiveTones* sont obtenues. Dans ce cas, la valeur *ActiveTonesThreshold* est représentative d'une sous partie de faible importance et d'une sous partie d'importance élevée de la plage de valeurs de la métrique *numberOfActive-Tones.*

Dans un mode de réalisation, la valeur *ActiveTonesThreshold* est une valeur supérieure à la valeur « 0 » et inférieure à la valeur *ActTonesThreshold.*

Dans un mode de réalisation, la valeur *ActiveTonesThreshold* est une valeur proche de la valeur *ActTonesThreshold* ou égale à la valeur *ActTonesThreshold*

Dans une étape 3312, le coût unitaire correspondant à chaque métrique pour laquelle des informations représentatives de sous parties de plages de valeurs ont été obtenues est calculé. Dans un mode de réalisation, au moins une des trois métriques *lqi, numOfActRoutes,* et *numberOfActiveTones* est concernée. Les coûts unitaires $LC_q$, $LC_{rt}$, et $LC_c$ sont calculés en utilisant des fonctions telles que seules les valeurs de chaque métrique n'appartenant pas à une sous partie de faible importance produisent des variations dudit coût unitaire. Le calcul du coût unitaire $LC_q$ utilise par exemple la fonction (3). Le calcul du coût unitaire $LC_{rt}$ utilise par exemple la fonction (4). Par ailleurs, lors de l'étape 3312, les coûts unitaires correspondant à des métriques pour lesquelles des informations représentatives de sous parties de plages de valeurs n'ont pas été obtenues sont calculés avec les fonctions fournies par le standard G3-PLC dans sa version « 02/2014 ». Cela concerne par exemple le coût unitaire $LC_h$ et le coût unitaire $LC_m$.

Dans une étape 3313, les coûts unitaires calculés lors de l'étape 3312 sont sommés pour déterminer le coût *LC.*

## Revendications

1. Procédé de détermination d'un coût *LC* d'un lien de communication, dit lien courant, reliant deux noeuds d'un réseau maillé utilisant des communications par courants porteurs, le procédé étant utilisé dans une procédure apte à sélectionner une route de communication parmi une pluralité de routes de communication dans le réseau maillé, chaque route étant constituée d'au moins un lien de communication, ledit lien courant étant associé à au moins une métrique comprise dans une plage prédéfinie de valeurs et permettant de déterminer un coût unitaire dudit lien courant correspondant à ladite métrique, le coût *LC* du lien courant dépendant du coût unitaire correspondant à chaque métrique associée au lien courant,
**caractérisé en ce que**, le procédé, lorsqu'il est mis en oeuvre par l'un desdits deux noeuds du réseau maillé, comprend les étapes suivantes pour au moins un coût unitaire dudit lien courant:

   - obtenir (3311) au moins une sous-partie de la plage prédéfinie de valeurs de ladite métrique correspondant audit coût unitaire, ladite sous-partie étant telle que, lorsque deux routes de communication différentes comprennent deux liens de communications différents associés chacun à une valeur de ladite métrique comprise dans la sous-partie, les valeurs de ladite métrique associées auxdits deux liens de communication sont considérées comme non discriminantes pour sélectionner une parmi les deux routes de communication, et,
   - calculer (3312) ledit coût unitaire dudit lien courant en utilisant une fonction reliant ledit coût unitaire à la métrique correspondante, la fonction étant telle que seules des valeurs de ladite métrique n'appartenant pas à ladite sous-partie produisent des variations dudit coût unitaire,

   et **en ce que** le procédé comprend en outre l'étape suivante :

   - déterminer (3313) le coût *LC* du lien courant en fonction de chaque coût unitaire calculé.

2. Procédé selon la revendication 1, **caractérisé en ce qu'**une métrique, dite métrique de qualité, est représentative d'une qualité du lien de communication, et **en ce que**, pour un coût unitaire *LCq* correspondant à la métrique de qualité, au moins deux sous-parties de la plage prédéfinie de valeurs sont obtenues comprenant :

   - une première sous partie correspondant à des valeurs de la métrique de qualité inférieure à une qualité minimum telle que toute valeur de la métrique de qualité inférieure à la qualité minimum est considérée insuffisante pour permettre une communication fiable, et,
   - une seconde sous partie correspondant à des valeurs de la métrique de qualité supérieure à une qualité maximum telle que toute valeur de la métrique de qualité supérieure à la qualité maximum est considérée suffisante pour permettre une communication parfaite.

3. Procédé selon la revendication 2, **caractérisé en ce que** le coût unitaire *LCq* correspondant à la métrique de qualité est calculé de la manière suivante :

$$LCq = adpKq \times MAX\left(0; MIN\left(1; \frac{\left((LQI_{strong} - LQI_{weak}) - (lqi - LQI_{weak})\right)}{(LQI_{strong} - LQI_{weak})}\right)\right)$$

où *MAX(x,y)* est une fonction prenant le maximum d'une variable *x* et d'une variable *y*, *MIN(x,y)* est une fonction prenant le minimum d'une variable *x* et d'une variable *y*, *adpKq* est un coefficient pondérateur configurable, *lqi* est une valeur de la métrique de qualité, $LQI_{strong}$ est la valeur de qualité maximum, $LQI_{weak}$ est la valeur de qualité minimum.

4. Procédé selon la revendication 1, 2 ou 3, **caractérisé en ce qu'**une métrique, dite taux de remplissage, est représentative d'un niveau de remplissage d'une table de routage du noeud de communication mettant en oeuvre le procédé, et **en ce que**, pour un coût unitaire *LCrt* correspondant au taux de remplissage, une sous-partie de la plage prédéfinie de valeurs est obtenue et correspond à des valeurs de taux de remplissage inférieures à un seuil de début de saturation en deçà duquel ladite table de routage est considérée comme vide.

5. Procédé selon la revendication 4, **caractérisé en ce que** le coût unitaire *LCrt* correspondant au taux de remplissage est calculé de la manière suivante :

$$LCrt = adpKrt \times MAX\left(0; \left(\frac{numOfActRoutes - SaturationThreshold}{MaxNumOfActRoutes - SaturationThreshold}\right)\right)$$

où *MAX(x,y)* est une fonction prenant le maximum d'une variable *x* et d'une variable *y*, *adpKrt* est un coefficient pondérateur configurable, *numOfActRoutes* est une valeur du taux de remplissage de ladite table de routage, *MaxNumOfActRoutes* est une valeur représentative d'une capacité maximale de ladite table de routage et *SaturationThreshold* est le seuil de début de saturation.

6. Procédé selon la revendication 3, **caractérisé en ce que** chaque communication réalisée dans le réseau maillé utilise le standard ITU-T G.9903, et **en ce que** le coût LC du lien courant est calculé de la manière suivante:

$$LC = LCh + LCq + LCm + LCc + LCrt$$

où *LCh* est un premier coût unitaire égal à un facteur de pondération *adpKh*, *LCm* est un deuxième coût unitaire fonction d'une modulation utilisée par lesdits deux noeuds du réseau maillé pour communiquer, *LCc* est un troisième coût unitaire fonction d'un nombre de sous-bandes utilisées par lesdits deux noeuds du réseau maillé pour communiquer et *LCrt* est un quatrième coût unitaire fonction d'un niveau de remplissage d'une table de routage du noeud de communication mettant en oeuvre le procédé, les premier, deuxième, troisième et quatrième coûts unitaires étant spécifiés par le standard ITU-T G.9903.

7. Procédé de sélection d'une route de communication parmi une pluralité de routes de communication reliant un noeud source à un noeud récepteur dans un réseau maillé utilisant des communications par courants porteurs, le réseau maillé comprenant un ensemble de noeuds de communication reliés par des liens de communication, le procédé étant mis en oeuvre par le noeud source, **caractérisé en ce que** le procédé comprend :

   - transmettre (32) à l'ensemble des noeuds du réseau maillé une demande de recherche de route, de sorte à provoquer une évaluation (33) d'un coût de route pour chaque route de ladite pluralité de routes, ladite évaluation comprenant dans chaque noeud impliqué dans l'une des routes de ladite pluralité de routes, la mise en oeuvre du procédé selon l'une quelconque des revendications 1 à 6, et,
   - recevoir (35) du noeud récepteur des informations représentatives d'une route sélectionnée (34) par ledit noeud récepteur à partir des coûts de route évalués, la route sélectionnée étant la route de communication associée à un coût de route minimum.

8. Procédé de sélection d'une route de communication parmi une pluralité de routes de communication reliant un noeud source à un noeud récepteur dans un réseau maillé utilisant des communications par courants porteurs, le réseau maillé comprenant un ensemble de noeuds de communication reliés par des liens de communication, le procédé étant mis en oeuvre par le noeud récepteur, **caractérisé en ce que** le procédé comprend :

- rechercher (34) un coût de route minimal parmi un ensemble de coûts de route reçu par le noeud récepteur, les coûts de route ayant été évalués (33) par des noeuds du réseau maillé impliqués dans l'une des routes de communication de ladite pluralité de routes suite à une transmission par le noeud source d'une demande de recherche de route à l'ensemble des noeuds du réseau maillé, ladite évaluation comprenant dans chaque noeud impliqué dans l'une des routes de ladite pluralité de routes, la mise en oeuvre du procédé selon l'une quelconque des revendications 1 à 6, et,
- transmettre (35) au noeud source des informations représentatives d'une route sélectionnée, la route sélectionnée étant une route de communication associée au coût de route minimal.

9. Dispositif de détermination d'un coût *LC* d'un lien de communication, dit lien courant, reliant deux noeuds d'un réseau maillé utilisant des communications par courants porteurs, le dispositif étant utilisé pour sélectionner une route de communication parmi une pluralité de routes de communication dans le réseau maillé, chaque route étant constituée d'au moins un lien de communication, ledit lien courant étant associé à au moins une métrique comprise dans une plage prédéfinie de valeurs et permettant de déterminer un coût unitaire dudit lien courant correspondant à ladite métrique, le coût *LC* du lien courant dépendant du coût unitaire correspondant à chaque métrique associée au lien courant,
**caractérisé en ce que** le dispositif comprend:

- des moyens pour obtenir (3311) au moins une sous-partie de la plage prédéfinie de valeurs de ladite métrique correspondant audit coût unitaire, ladite sous-partie étant telle que, lorsque deux routes de communication différentes comprennent deux liens de communications différents associés chacun à une valeur de ladite métrique comprise dans la sous-partie, les valeurs de ladite métrique associées auxdits deux liens de communication sont considérées comme non discriminantes pour sélectionner une parmi les deux routes de communication,
- des moyens pour calculer (3312) ledit coût unitaire dudit lien courant en utilisant une fonction reliant ledit coût unitaire à la métrique correspondante, la fonction étant telle que seules des valeurs de ladite métrique n'appartenant pas à ladite sous-partie produisent des variations dudit coût unitaire,
- des moyens pour déterminer (3313) le coût *LC* du lien courant en fonction de chaque coût unitaire calculé.

10. Produit programme d'ordinateur, **caractérisé en ce qu'**il comporte des instructions pour mettre en oeuvre, par un dispositif, le procédé selon l'une quelconque des revendications 1 à 6 par un processeur du dispositif.

11. Moyens de stockage, **caractérisés en ce qu'**ils stockent un programme d'ordinateur comportant des instructions pour mettre en oeuvre, par un dispositif, le procédé selon l'une quelconque des revendications 1 à 6 lorsque ledit programme est exécuté par un processeur du dispositif.


**Patentansprüche**

1. Verfahren zur Bestimmung von Kosten *LC* einer Kommunikationsverbindung, Stromverbindung genannt, welche zwei Knoten eines vermaschten Netzes verbindet, das Kommunikation über Stromleitungen verwendet, wobei das Verfahren in einer Prozedur angewendet wird, die geeignet ist, eine Kommunikationsroute aus mehreren Kommunikationsrouten in dem vermaschten Netz auszuwählen, wobei jede Route aus wenigstens einer Kommunikationsverbindung besteht, wobei die Stromverbindung wenigstens einer Metrik zugeordnet ist, die in einem vordefinierten Wertebereich enthalten ist und ermöglicht, eine Einheitskostengröße der Stromverbindung zu bestimmen, die der Metrik entspricht, wobei die Kosten *LC* der Stromverbindung von der Einheitskostengröße abhängen, die jeder Metrik entspricht, die der Stromverbindung zugeordnet ist,
**dadurch gekennzeichnet, dass** das Verfahren, wenn es für einen der zwei Knoten des vermaschten Netzes durchgeführt wird, die folgenden Schritte für wenigstens eine Einheitskostengröße der Stromverbindung umfasst:

- Gewinnen (3311) wenigstens eines Teilbereichs des vordefinierten Wertebereichs der Metrik, die der Einheitskostengröße entspricht, wobei der Teilbereich so beschaffen ist, dass, wenn zwei verschiedene Kommunikationsrouten zwei verschiedene Kommunikationsverbindungen umfassen, die jeweils einem Wert der Metrik zugeordnet sind, der in dem Teilbereich enthalten ist, die Werte der Metrik, die den zwei Kommunikationsverbindungen zugeordnet sind, als nicht diskriminativ für das Auswählen einer aus den zwei Kommunikationsrouten betrachtet werden, und

- Berechnen (3312) der Einheitskostengröße der Stromverbindung unter Verwendung einer Funktion, welche die Einheitskostengröße mit der entsprechenden Metrik verbindet, wobei die Funktion so beschaffen ist, dass nur Werte der Metrik, die dem Teilbereich nicht angehören, Änderungen der Einheitskostengröße bewirken,

und dadurch, dass das Verfahren außerdem den folgenden Schritt umfasst:

- Bestimmen (3313) der Kosten $LC$ der Stromverbindung in Abhängigkeit von jeder berechneten Einheitskostengröße.

2. Verfahren nach Anspruch 1, **dadurch gekennzeichnet, dass** eine Metrik, Qualitätsmetrik genannt, für eine Qualität der Kommunikationsverbindung repräsentativ ist, und dadurch, dass für eine Einheitskostengröße $LCq$, die der Qualitätsmetrik entspricht, wenigstens zwei Teilbereiche des vordefinierten Wertebereichs gewonnen werden, welche umfassen:

- einen ersten Teilbereich, welcher Werten der Qualitätsmetrik entspricht, die kleiner als eine minimale Qualität sind, die so beschaffen ist, dass jeder Wert der Qualitätsmetrik, der kleiner als die minimale Qualität ist, als unzureichend, um eine zuverlässige Kommunikation zu ermöglichen, betrachtet wird, und
- einen zweiten Teilbereich, welcher Werten der Qualitätsmetrik entspricht, die größer als eine maximale Qualität sind, die so beschaffen ist, dass jeder Wert der Qualitätsmetrik, der größer als die maximale Qualität ist, als ausreichend, um eine perfekte Kommunikation zu ermöglichen, betrachtet wird.

3. Verfahren nach Anspruch 2, **dadurch gekennzeichnet, dass** die Einheitskostengröße $LCq$, die der Qualitätsmetrik entspricht, wie folgt berechnet wird:

$$\mathrm{LC} = adpKq \times MAX\left(0; MIN\left(1; \frac{\left(\left(LQI_{strong} - LQI_{weak}\right) - \left(lqi - LQI_{weak}\right)\right)}{\left(LQI_{strong} - LQI_{weak}\right)}\right)\right),$$

wobei $MAX(x,y)$ eine Funktion ist, welche das Maximum einer Variablen $x$ und einer Variablen $y$ annimmt, $MIN(x,y)$ eine Funktion ist, welche das Minimum einer Variablen $x$ und einer Variablen $y$ annimmt, $adpKq$ ein konfigurierbarer Gewichtungskoeffizient ist, $lqi$ ein Wert der Qualitätsmetrik ist, $LQI_{strong}$ der maximale Qualitätswert ist, $LQI_{weak}$ der minimale Qualitätswert ist.

4. Verfahren nach Anspruch 1, 2 oder 3, **dadurch gekennzeichnet, dass** eine Metrik, Füllgrad genannt, für ein Niveau der Füllung einer Routingtabelle des Kommunikationsknotens, der das Verfahren durchführt, repräsentativ ist, und dadurch, dass für eine Einheitskostengröße $LCrt$, die dem Füllgrad entspricht, ein Teilbereich des vordefinierten Wertebereichs gewonnen wird und Werten des Füllgrades entspricht, die kleiner als ein Schwellenwert des Sättigungsbeginns sind, unterhalb dessen die Routingtabelle als leer betrachtet wird.

5. Verfahren nach Anspruch 4, **dadurch gekennzeichnet, dass** die Einheitskostengröße $LCrt$, die dem Füllgrad entspricht, wie folgt berechnet wird:

$$LCrt = adpKrt \times MAX\left(0; \left(\frac{numOfActRoutes - SaturationThreshold}{MaxNumOfActRoutes - SaturationThreshold}\right)\right)$$

wobei $MAX(x,y)$ eine Funktion ist, welche das Maximum einer Variablen $x$ und einer Variablen $y$ annimmt, $adpKrt$ ein konfigurierbarer Gewichtungskoeffizient ist, $numOfActRoutes$ ein Wert des Füllgrades der Routingtabelle ist, $MaxNumOfActRoutes$ ein Wert ist, der für eine maximale Kapazität der Routingtabelle repräsentativ ist, und $SaturationThreshold$ der Schwellenwert des Sättigungsbeginns ist.

6. Verfahren nach Anspruch 3, **dadurch gekennzeichnet, dass** jede Kommunikation, die in dem vermaschten Netz durchgeführt wird, den Standard ITU-T G.9903 verwendet, und dadurch, dass die Kosten der Stromverbindung wie folgt berechnet werden:

$$LC = LCh + LCq + LCm + LCc + LCrt,$$

wobei *LCh* eine erste Einheitskostengröße ist, die gleich einem Gewichtungsfaktor *adpKh* ist, *LCm* eine zweite Einheitskostengröße ist, die von einer Modulation abhängig ist, die von den zwei Knoten des vermaschten Netzes verwendet wird, um zu kommunizieren, *LCc* eine dritte Einheitskostengröße ist, die von einer Anzahl von Teilbändern abhängig ist, die von den zwei Knoten des vermaschten Netzes verwendet werden, um zu kommunizieren, und *LCrt* eine vierte Einheitskostengröße ist, die von einem Niveau der Füllung einer Routingtabelle des Kommunikationsknotens abhängig ist, der das Verfahren durchführt, wobei die erste, zweite, dritte und vierte Einheitskostengröße durch den Standard ITU-T G.9903 spezifiziert sind.

7.  Verfahren zur Auswahl einer Kommunikationsroute aus mehreren Kommunikationsrouten, die einen Quellknoten mit einem Empfängerknoten verbinden, in einem vermaschten Netz, das Kommunikation über Stromleitungen verwendet, wobei das vermaschte Netz eine Menge von Kommunikationsknoten umfasst, die durch Kommunikationsverbindungen verbunden sind, wobei das Verfahren von dem Quellknoten durchgeführt wird, **dadurch gekennzeichnet, dass** das Verfahren umfasst:

    - Übertragen (32), zu der Menge der Knoten des vermaschten Netzes, einer Routensuchanforderung, um so eine Ermittlung (33) einer Routenkostengröße für jede Route der mehreren Routen zu bewirken, wobei diese Ermittlung in jedem Knoten, der in einer der Routen von den mehreren Routen enthalten ist, die Durchführung des Verfahrens nach einem der Ansprüche 1 bis 6 umfasst, und
    - Empfangen (35), von dem Empfängerknoten, von Informationen, die für eine von dem Empfängerknoten ausgehend von den ermittelten Routenkostengrößen ausgewählte (34) Route repräsentativ sind, wobei die ausgewählte Route die Kommunikationsroute ist, die einer minimalen Routenkostengröße zugeordnet ist.

8.  Verfahren zur Auswahl einer Kommunikationsroute aus mehreren Kommunikationsrouten, die einen Quellknoten mit einem Empfängerknoten verbinden, in einem vermaschten Netz, das Kommunikation über Stromleitungen verwendet, wobei das vermaschte Netz eine Menge von Kommunikationsknoten umfasst, die durch Kommunikationsverbindungen verbunden sind, wobei das Verfahren von dem Empfängerknoten durchgeführt wird, **dadurch gekennzeichnet, dass** das Verfahren umfasst:

    - Suchen (34) einer minimalen Routenkostengröße in einer Menge von Routenkostengrößen, die durch den Empfängerknoten empfangen wird, wobei die Routenkostengrößen durch Knoten des vermaschten Netzes ermittelt werden (33), die in einer der Kommunikationsrouten von den mehreren Routen enthalten sind, im Anschluss an eine Übertragung, durch den Quellknoten, einer Routensuchanforderung zu der Menge der Knoten des vermaschten Netzes, wobei diese Ermittlung in jedem Knoten, der in einer der Routen von den mehreren Routen enthalten ist, die Durchführung des Verfahrens nach einem der Ansprüche 1 bis 6 umfasst, und
    - Übertragen (35), zu dem Quellknoten, von Informationen, die für eine ausgewählte Route repräsentativ sind, wobei die ausgewählte Route die Kommunikationsroute ist, die der minimalen Routenkostengröße zugeordnet ist.

9.  Vorrichtung zur Bestimmung von Kosten *LC* einer Kommunikationsverbindung, Stromverbindung genannt, welche zwei Knoten eines vermaschten Netzes verbindet, das Kommunikation über Stromleitungen verwendet, wobei die Vorrichtung verwendet wird, um eine Kommunikationsroute aus mehreren Kommunikationsrouten in dem vermaschten Netz auszuwählen, wobei jede Route aus wenigstens einer Kommunikationsverbindung besteht, wobei die Stromverbindung wenigstens einer Metrik zugeordnet ist, die in einem vordefinierten Wertebereich enthalten ist und ermöglicht, eine Einheitskostengröße der Stromverbindung zu bestimmen, die der Metrik entspricht, wobei die Kosten *LC* der Stromverbindung von der Einheitskostengröße abhängen, die jeder Metrik entspricht, die der Stromverbindung zugeordnet ist,
    **dadurch gekennzeichnet, dass** die Vorrichtung umfasst:

    - Mittel zum Gewinnen (3311) wenigstens eines Teilbereichs des vordefinierten Wertebereichs der Metrik, die der Einheitskostengröße entspricht, wobei der Teilbereich so beschaffen ist, dass, wenn zwei verschiedene Kommunikationsrouten zwei verschiedene Kommunikationsverbindungen umfassen, die jeweils einem Wert der Metrik zugeordnet sind, der in dem Teilbereich enthalten ist, die Werte der Metrik, die den zwei Kommunikationsverbindungen zugeordnet sind, als nicht diskriminativ für das Auswählen einer aus den zwei Kommunikationsrouten betrachtet werden,

- Mittel zum Berechnen (3312) der Einheitskostengröße der Stromverbindung unter Verwendung einer Funktion, welche die Einheitskostengröße mit der entsprechenden Metrik verbindet, wobei die Funktion so beschaffen ist, dass nur Werte der Metrik, die dem Teilbereich nicht angehören, Änderungen der Einheitskostengröße bewirken,
- Mittel zum Bestimmen (3313) der Kosten *LC* der Stromverbindung in Abhängigkeit von jeder berechneten Einheitskostengröße.

10. Computerprogrammprodukt, **dadurch gekennzeichnet, dass** es Anweisungen umfasst, um mittels einer Vorrichtung das Verfahren nach einem der Ansprüche 1 bis 6 durch einen Prozessor der Vorrichtung durchzuführen.

11. Speichermittel, **dadurch gekennzeichnet, dass** sie ein Computerprogramm speichern, das Anweisungen umfasst, um mittels einer Vorrichtung das Verfahren nach einem der Ansprüche 1 bis 6 durchzuführen, wenn das Programm von einem Prozessor der Vorrichtung ausgeführt wird.

**Claims**

1. Method for determining a cost *LC* of a communication link, termed current link, linking two nodes of a meshed network using power line communications, the method being used in a procedure able to select a communication route out of a plurality of communication routes in the meshed network, each route consisting of at least one communication link, the said current link being associated with at least one metric included in a predefined span of values and making it possible to determine a unit cost of the said current link corresponding to the said metric, the cost *LC* of the current link depending on the unit cost corresponding to each metric associated with the current link, **characterized in that**, the method, when it is implemented by one of the said two nodes of the meshed network, comprises the following steps for at least one unit cost of the said current link:

   - obtaining (3311) at least one sub-part of the predefined span of values of the said metric corresponding to the said unit cost, the said sub-part being such that, when two different communication routes comprise two different communications links each associated with a value of the said metric included in the sub-part, the values of the said metric which are associated with the said two communication links are considered to be non-discriminating for selecting one out of the two communication routes, and,
   - calculating (3312) the said unit cost of the said current link by using a function linking the said unit cost to the corresponding metric, the function being such that only values of the said metric not belonging to the said sub-part produce variations of the said unit cost,

   and **in that** the method furthermore comprises the following step:

   - determining (3313) the cost *LC* of the current link as a function of each calculated unit cost.

2. Method according to Claim 1, **characterized in that** a metric, termed quality metric, is representative of a quality of the communication link, and **in that**, for a unit cost *LCq* corresponding to the quality metric, at least two sub-parts of the predefined span of values are obtained comprising:

   - a first sub-part corresponding to values of the quality metric below a minimum quality such that any value of the quality metric below the minimum quality is considered insufficient to allow reliable communication, and,
   - a second sub-part corresponding to values of the quality metric above a maximum quality such that any value of the quality metric above the maximum quality is considered sufficient to allow perfect communication.

3. Method according to Claim 2, **characterized in that** the unit cost *LCq* corresponding to the quality metric is calculated in the following manner:

$$LCq = adpKq \times MAX\left(0; MIN\left(1; \frac{\left((LQI_{strong} - LQI_{weak}) - (lqi - LQI_{weak})\right)}{(LQI_{strong} - LQI_{weak})}\right)\right)$$

where *MAX(x,y)* is a function taking the maximum of a variable *x* and of a variable *y*, *MIN(x,y)* is a function taking the minimum of a variable *x* and of a variable *y*, *adpKq* is a configurable weighting coefficient, *lqi* is a value of the quality metric, $LQI_{strong}$ is the maximum quality value, $LQI_{weak}$ is the minimum quality value.

**4.** Method according to Claim 1, 2 or 3, **characterized in that** a metric, termed degree of fill, is representative of a fill level of a routing table of the communication node implementing the method, and **in that**, for a unit cost *LCrt* corresponding to the degree of fill, a sub-part of the predefined span of values is obtained and corresponds to degree of fill values below a start-of-saturation threshold below which the said routing table is considered to be empty.

**5.** Method according to Claim 4, **characterized in that** the unit cost *LCrt* corresponding to the degree of fill is calculated in the following manner:

$$LCrt = adpKrt \times MAX\left(0; \left(\frac{numOfActRoutes - SaturationThreshold}{MaxNumOfActRoutes - SaturationThreshold}\right)\right)$$

where *MAX(x,y)* is a function taking the maximum of a variable *x* and of a variable *y*, *adpKrt* is a configurable weighting coefficient, *numOfActRoutes* is a value of the degree of fill of the said routing table, *MaxNumOfActRoutes* is a value representative of a maximum capacity of the said routing table and *SaturationThreshold* is the start-of-saturation threshold.

**6.** Method according to Claim 3, **characterized in that** each communication carried out in the meshed network uses the ITU-T G.9903 standard, and **in that** the cost *LC* of the current link is calculated in the following manner:

$$LC = LCh + LCq + LCm + LCc + LCrt$$

where *LCh* is a first unit cost equal to a weighting factor *adpKh*, *LCm* is a second unit cost dependent on a modulation used by the said two nodes of the meshed network to communicate, *LCc* is a third unit cost dependent on a number of sub-bands used by the said two nodes of the meshed network to communicate and *LCrt* is a fourth unit cost dependent on a level of fill of a routing table of the communication node implementing the method, the first, second, third and fourth unit costs being specified by the ITU-T G.9903 standard.

**7.** Method for selecting a communication route out of a plurality of communication routes linking a source node to a receiver node in a meshed network using power line communications, the meshed network comprising a set of communication nodes linked by communication links, the method being implemented by the source node, **characterized in that** the method comprises:

- transmitting (32) to the set of nodes of the meshed network a route search request, so as to prompt an evaluation (33) of a route cost for each route of the said plurality of routes, the said evaluation comprising in each node involved in one of the routes of the said plurality of routes, the implementation of the method according to any one of Claims 1 to 6, and,
- receiving (35) from the receiver node information representative of a route selected (34) by the said receiver node on the basis of the evaluated route costs, the selected route being the communication route associated with a minimum route cost.

**8.** Method for selecting a communication route out of a plurality of communication routes linking a source node to a receiver node in a meshed network using power line communications, the meshed network comprising a set of communication nodes linked by communication links, the method being implemented by the receiver node, **characterized in that** the method comprises:

- searching (34) for a minimum route cost out of a set of route costs received by the receiver node, the route costs having been evaluated (33) by nodes of the meshed network that are involved in one of the communication routes of the said plurality of routes subsequent to a transmission by the source node of a route search request to the set of nodes of the meshed network, the said evaluation comprising in each node involved in one of the routes of the said plurality of routes, the implementation of the method according to any one of Claims 1 to 6, and,
- transmitting (35) to the source node information representative of a selected route, the selected route being a communication route associated with the minimum route cost.

9. Device for determining a cost *LC* of a communication link, termed current link, linking two nodes of a meshed network using power line communications, the device being used to select a communication route out of a plurality of communication routes in the meshed network, each route consisting of at least one communication link, the said current link being associated with at least one metric included in a predefined span of values and making it possible to determine a unit cost of the said current link corresponding to the said metric, the cost *LC* of the current link depending on the unit cost corresponding to each metric associated with the current link, **characterized in that** the device comprises:

- means for obtaining (3311) at least one sub-part of the predefined span of values of the said metric corresponding to the said unit cost, the said sub-part being such that, when two different communication routes comprise two different communications links each associated with a value of the said metric included in the sub-part, the values of the said metric which are associated with the said two communication links are considered to be non-discriminating for selecting one out of the two communication routes,
- means for calculating (3312) the said unit cost of the said current link by using a function linking the said unit cost to the corresponding metric, the function being such that only values of the said metric not belonging to the said sub-part produce variations of the said unit cost,
- means for determining (3313) the cost *LC* of the current link as a function of each calculated unit cost.

10. Computer program product, **characterized in that** it comprises instructions for implementing, by a device, the method according to any one of Claims 1 to 6 by a processor of the device.

11. Storage means, **characterized in that** they store a computer program comprising instructions for implementing, by a device, the method according to any one of Claims 1 to 6 when the said program is executed by a processor of the device.

Fig. 1

Fig. 2

```
┌──────────────────┐
│   Demande de     │  ⌇ 31
│  transmission    │
└──────────────────┘
         │
         ▼
┌──────────────────┐
│ Démarrage calculs│  ⌇ 32
│  de coûts de route│
└──────────────────┘
         │
         ▼
┌──────────────────┐
│  Evaluation coûts│  ⌇ 33
│     de route     │
└──────────────────┘
         │
         ▼
┌──────────────────┐
│  Recherche coût de│  ⌇ 34
│   route minimal  │
└──────────────────┘
         │
         ▼
┌──────────────────┐
│ Transmission info.│  ⌇ 35
│ route sélectionnée│
└──────────────────┘
         │
         ▼
┌──────────────────┐
│   Transmission   │  ⌇ 36
└──────────────────┘
```

Fig. 3

Réception demande de calcul de coûts de route    330

Détermination coût lien: LC    331

RC=RC + LC    332

transmission demande de recherche de route    333

Fig. 4

Obtention sous partie(s)    3311

Calcul coût(s) unitaire(s)    3312

Détermination LC    3313

Fig. 5

**EP 2 999 163 B1**

## RÉFÉRENCES CITÉES DANS LA DESCRIPTION

**Documents brevets cités dans la description**

- US 20120182881 A1

- US 20120008503 A1